# EUROPÄISCHE PATENTSCHRIFT

(11) **EP 0 565 832 B1**
(45) Veröffentlichungstag und Bekanntmachung des Hinweises auf die Patenterteilung: **12.04.1995**
(21) Anmeldenummer: 93102907.8
(22) Anmeldetag: 25.02.1993
(51) Int. Cl.: F16F 9/49

(54) **Hydraulischer Schwingungsdämpfer für Kraftfahrzeuge**
Hydraulic vehicle vibration damper
Amortisseur de vibrations hydraulique pour véhicule

(30) Priorität: 11.04.1992 DE 4212228
(43) Veröffentlichungstag der Anmeldung: 20.10.1993
(73) Patentinhaber: AUGUST BILSTEIN GMBH & CO. KG, 58240 Ennepetal (DE)
(72) Erfinder: Angermann, Rolf, Dr., W-5804 Herdecke (DE); Hölscher, Reinhard, Dr., W-4796 Salzkotten (DE); Hansemann, Volker, Dipl.-Ing., W-5960 Olpe (DE); Kolz, Berthold, W-5509 Gusenburg (DE); Theobald, Walter, Dipl.-Ing., W-6649 Weiskirchen (DE); Wiegand, Friedrich, Dipl.-Ing., W-5501 Waldrach (DE)

(56) Entgegenhaltungen:
- GB-A- 1 305 311
- US-A- 3 175 645

## Beschreibung

Die Erfindung betrifft einen hydraulischen Schwingungsdämpfer für Kraftfahrzeuge mit einem eine Dämpfungsflüssigkeit enthaltenden Dämpferzylinder, einem mit einer Kolbenstange verbundenen Dämpferkolben, der den Dämpferzylinder in zwei Arbeitsräume unterteilt, einer am von der Kolbenstange durchdrungenen Ende angeordnete, den Dämpferzylinder verschließende Führungseinheit und einem hydraulischen Zuganschlag, bestehend aus einer unter der Führungseinheit befindlichen becherförmigen Ausnehmung und einem oberhalb des Dämpfungskolben an der Kolbenstange angeordneten und in Zugrichtung verschlossene Durchströmkanäle aufweisenden Anschlagkolben.

Die in Schwingungsdämpfern von Kraftfahrzeugen eingesetzten hydraulischen Zuganschläge übernehmen im Fahrbetrieb, z. B. wenn es beim Überfahren von Bodenwellen zum Ausheben des Fahrzeugaufbaus kommt, die Begrenzung des Rad-Ausfederweges durch ein wegabhängiges Erhöhen der Dämpfungskräfte gegen Ende der Zugstufe.

Bekannte hydraulische Zuganschläge (Reimpell/Stoll Fahrwerktechnik: Stoß- und Schwingungsdämpfer, Vogel-Buchverlag Würzburg) bestehen im wesentlichen aus einer in der Führungseinheit der Kolbenstange integrierten Ausnehmung und einem einteiligen, aus Drehteilen hergestellten Anschlagkolben, dessen Außendurchmesser nur geringfügig kleiner ist, als der Innendurchmesser der Ausnehmung. Durch den verbleibenden Spalt zwischen der Innenwandung der Ausnehmung und dem Kolben wird die Ölmenge gepreßt. Es entsteht eine Drosselwirkung, die die Zugkräfte gegen Hubende ansteigen läßt.

Da die Größe der erreichbaren Zugkräfte über den Spaltquerschnitt eingestellt wird, müssen bei der Fertigung des Anschlagkolbens und der Ausnehmung sehr hohe Toleranzen eingehalten werden, wodurch sich der Fertigungsaufwand wesentlich erhöht.

Schwingungsdämpfer mit Anschlagkolben sind aus den GB-A-1 305 311 sowie US-A-3 175 645 bekannt
Die Aufgabe der Erfindung ist es, einen hydraulischen Zuganschlag für einen Schwingungsdämpfer zu schaffen, bei dem sich trotz einer genauen Einstellung des Spaltquerschnitts der Fertigungsaufwand wesentlich verringert.

Die Aufgabe wird durch den kennzeichnenden Teil des Anspruchs 1 gelöst, wobei die Unteransprüche vorteilhafte Ausführungen darstellen.

Gemäß der Erfindung besteht der Anschlagkolben aus nur einer dünnen, einen geringfügig kleineren Außendurchmesser als der Steuerdurchmesser der Ausnehmung aufweisende Anschlagscheibe und einem dickeren, die Anschlagscheibe tragenden Abstützteil, wodurch nur noch die dünnere Anschlagscheibe den Querschnitt des Spaltes für die Restölmenge bestimmt.

In einer Ausführungsform des Anschlagkolbens befinden sich die die Durchlaßkanäle in Zugrichtung verschließenden Rückschlagventile zwischen der Anschlagscheibe und dem Abstützteil. Es ist jedoch auch möglich, die Rückschlagventile, vorzugsweise wenigstens eine Federscheibe, auf der Anschlagscheibe anzuordnen.

Die mit dem Anschlagkolben korrespondierende Ausnehmung ist durch ein unterhalb der Führungseinheit der Kolbenstange angeordnetes rohrförmiges Teil gebildet, dessen innere Wandung zur Erzeugung einer bestimmten wegabhängigen Dämpfungskraft am Hubende eine von der Rohrgestalt abweichende innere Kontur aufweist. In einer vorteilhaften Ausführung ist die dem Anschlagkolben zugewandte Seite des rohrförmigen Teils zum Beispiel angefast, um einen zu steilen Anstieg der Dämpfungskraft zu vermeiden und ein weiches Einsetzen der Zusatzdämpfung zu gewährleisten. Eine andere Möglichkeit zur Beeinflussung der Dämpfungskraft besteht darin, mindestens zwei mit korrespondierenden Durchströmkanälen versehene Anschlagscheiben im Anschlagkolben anzuordnen, wodurch die Höhe des auf die Dämpfungskraft wirkenden Spaltes verändert wird.

Der Zuganschlag gemäß der Erfindung hat den Vorteil, daß nur noch die Außenkontur der zum Beispiel aus einer gestanzten Federscheibe hergestellten Anschlagscheibe enge Toleranzen aufweisen muß, um die gewünschte Dämpfungskennlinie im Endhub zu erzielen, und ein zusätzlicher spanender Arbeitsgang vermieden wird.

Nachfolgend wird die Erfindung anhand mehrerer Ausführungsbeispiele näher erläutert. Die zugehörigen Zeichnungen zeigen:
- Fig. 1: Ausschnitt eines Zweirohrdämpfers, bei dem die Rückschlagventile zwischen Anschlagscheibe und Abstützteil angeordnet sind,
- Fig. 2: Ausschnitt eines Einrohrdämpfers, bei dem die Rückschlagventile auf der Anschlagscheibe angeordnet sind,
- Fig. 3 a): Dämpfungskraftkennlinie und

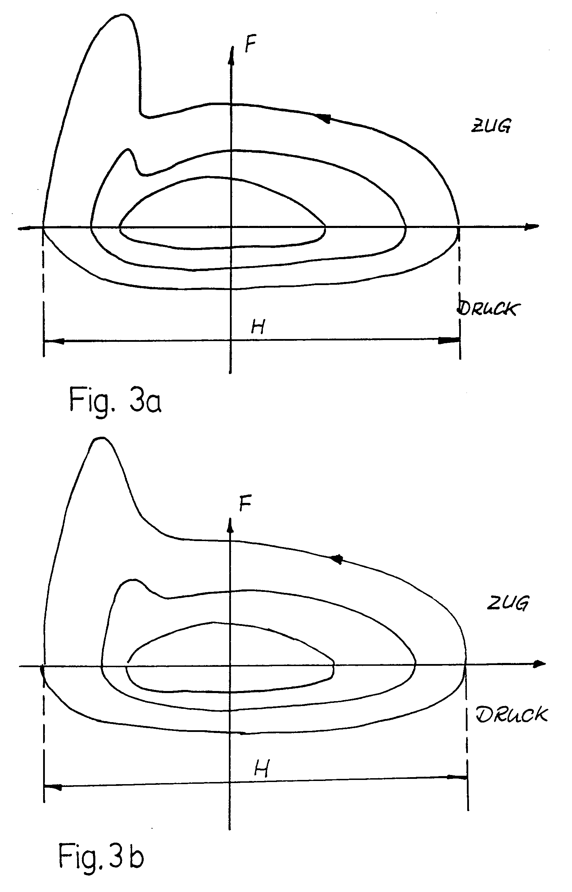

- Fig. 3 b): Dämpfungskraftkennlinie bei angefaster Kante der Ausnehmung.

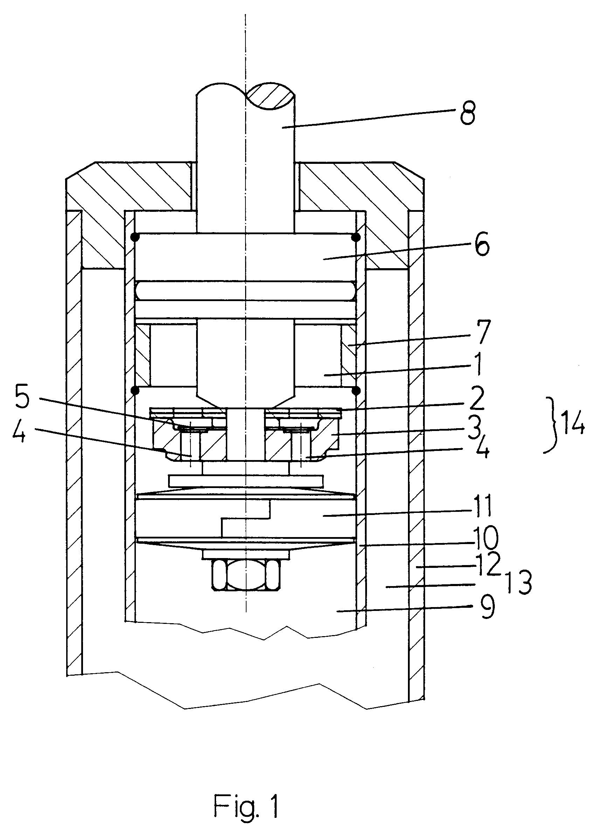

Der in Fig. 1 dargestellte, nach dem Zweirohr-Prinzip arbeitende Schwingungsdämpfer besteht aus einem Arbeitsraum 9, der durch den Dämpferzylinder 10 gebildet wird und am unteren Ende durch ein nicht dargestelltes Bodenventil und oben durch eine Führungseinheit 6 begrenzt wird. In der Führungseinheit gleitet die Kolbenstange 8, die im Arbeitsraum 9 den Dämpfungskolben 11 aufnimmt. Der Dämpferzylinder 10 ist von einem Außenrohr 12 umgeben. Zwischen beiden befindet sich der Ausgleichsraum 13, der etwa bis auf halbe Höhe mit Dämpfungsflüssigkeit gefüllt ist, während der Arbeitsraum 9 volle Flüssigkeitsfüllung aufweist.

Unterhalb der Führungseinheit 6 der Kolbenstange befindet sich ein hydraulischer Zuganschlag, bestehend aus einem rohrförmigen Teil 7, das die Ausnehmung 1 bildet, und einem Anschlagkolben 14. Der Anschlagskolben besteht aus einer dünnen, einen geringfügig kleineren Außendurchmesser als der Steuerdurchmesser der Ausnehmung 1 aufweisenden Anschlagscheibe 2 und einem dickeren, die Anschlagscheibe 2 tragenden Abstützteil 3, wobei nur die Anschlagscheibe den Spalt für die Restölmenge zwischen der Innenwandung des rohrförmigen Teils 7 und dem Anschlagkolben 14 bildet und enge Toleranzen aufweisen muß. Das Abstützteil 3 hat nur eine reine Abstützfunktion für die Anschlagscheibe 2. Der Anschlagkolben 14 weist außerdem Durchströmkanäle 4 auf, die in Zugrichtung durch mindestens eine Federscheibe 5 verschlossen sind, die bei dieser Ausführung des Zuganschlages zwischen der Anschlagscheibe 2 und dem Abstützteil angeordnet ist. Das zugehörige Dämpfungskraft-Hub-Diagramm ist in Fig. 3 a gezeigt, bei dem die Dämpfungskraft in der Zugstufe beim Einsetzen des hydraulischen Zuganschlages gegen Ende des Hubs H verhältnismäßig steil ansteigt.

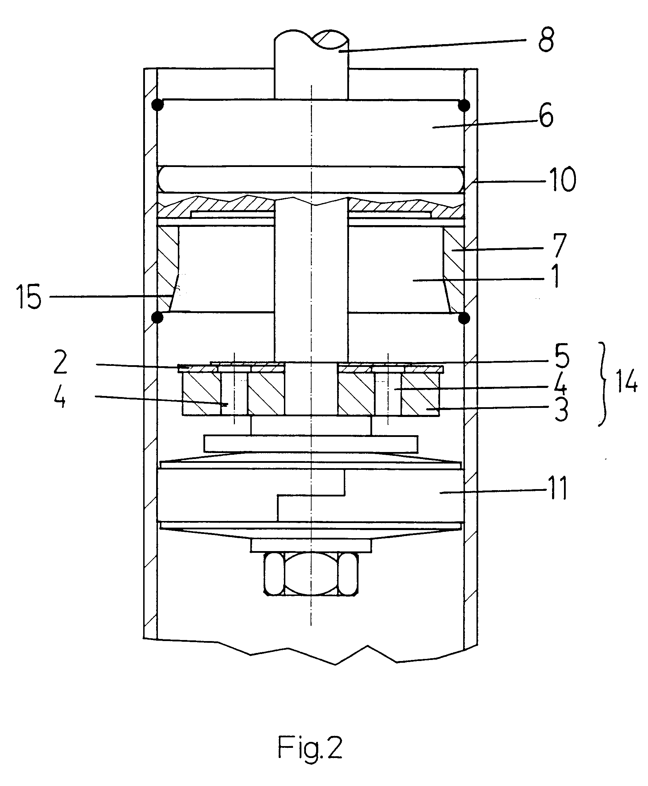

Der in Fig. 2 dargestellte Einrohrschwingungsdämpfer besteht im wesentlichen aus einem Dämpfungsflüssigkeit enthaltenden Dämpferzylinder 10 und einer in den Dämpferzylinder eintauchenden, in einem Dämpfungskolben 11 endenden Kolbenstange 8, die durch die Führungseinheit 6 im Dämpferzylinder 10 geführt wird. Zur Begrenzung des Rad-Ausfederungsweges befindet sich unterhalb der Führungseinheit 6 eine Ausnehmung 1, welche durch ein rohrförmiges Teil 7 gebildet wird. Die Kolbenstange 8 trägt oberhalb des Dämpfungskolben 11 einen Anschlagkolben 14, der aus der Anschlagscheibe 2 und dem Abstützteil 3 besteht. Die Durchströmkanäle 4 des Anschlagkolbens 14 werden in Zugrichtung durch die oberhalb der Anschlagscheibe 2 angeordnete Federscheibe 5 verschlossen. Auch hier wird der Spalt für die Restölmenge beim Ausfahren der Kolbenstange 8 nur durch die Außenkante der Anschlagscheibe 2 und der Innenwandung des rohrförmigen Teils 7 gebildet. Durch die Innenfase 15 des rohrförmigen Teils 7 wird ein weicheres Einsetzen der durch den Zuganschlag erhöhten Dämpfungskraft F am Ende des Hubes H der Zugstufe (Fig. 3 b) erreicht, wobei jedoch auch andere Innenkonturen des rohrförmigen Teils 7 denkbar sind, um eine bestimmte Dämpfungskraftlinie im Bereich des Hubendes H zu realisieren.

Eine weitere Möglichkeit, Einfluß auf die durch den Zuganschlag erzeugte zusätzliche Dämpfungskraft zu nehmen, besteht darin, mindestens zwei mit korrespondierenden Durchstromkanälen 4 versehene Anschlagscheiben 2 vorzusehen.

## Patentansprüche

1. Hydraulischer Schwingungsdämpfer für Kraftfahrzeuge mit einem eine Dämpfungsflüssigkeit enthaltenden Dämpferzylinder, einem mit einer Kolbenstange verbundenen Dämpferkolben, der den Dämpferzylinder in zwei Arbeiträume unterteilt, einer am von der Kolbenstange durchdrungenen Ende angeordnete, den Dämpferzylinder verschließende Führungseinheit und einem hydraulischen Zuganschlag, bestehend aus einer unter der Führungseinheit befindlichen becherförmigen Ausnehmung und einem oberhalb des Dämpfungskolbens an der Kolbenstange angeordneten, in Zugrichtung verschlossene Durchströmkanäle aufweisenden Anschlagkolben, dadurch gekennzeichnet, daß der Anschlagkolben aus nur einer dünnen, einen geringfügig kleineren Außendurchmesser als der Steuerdurchmesser der Ausnehmung (1) aufweisenden Anschlagscheibe (2) und einem dickeren, die Anschlagscheibe (2) tragenden Abstützteil (3) besteht.

2. Schwingungsdämpfer nach Anspruch 1, dadurch gekennzeichnet, daß das Abstützteil (3) einen kleineren Außendurchmesser aufweist als die Anschlagscheibe (2).

3. Schwingungsdämpfer nach Anspruch 1 oder 2, dadurch gekennzeichnet, daß die die Durchlaßkanäle (4) in Zugrichtung verschließenden Rückschlagventile zwischen dem Abstützteil (3) und der Anschlagscheibe (2) angeordnet sind.

4. Schwingungsdämpfer nach einem der Ansprüche 1 oder 2, dadurch gekennzeichnet, daß die die Durchlaßkanäle (4) in Zugrichtung verschließenden Rückschlagventile oberhalb der Anschlagscheibe (2) angeordnet sind.

5. Schwingungsdämpfer nach einem der Ansprüche 1 bis 4, dadurch gekennzeichnet, daß die Rückschlagventile durch wenigstens eine die Durchlaßkanäle (4) in Zugrichtung abdeckende Federscheibe (5) gebildet sind.

6. Schwingungsdämpfer nach einem der Ansprüche 1 bis 5, dadurch gekennzeichnet, daß die Ausnehmung (1) durch ein unterhalb der Führungseinheit (6) der Kolbenstange (8) angeordnetes rohrförmiges Teil (7) gebildet ist.

7. Schwingungsdämpfer nach Anspruch 6, dadurch gekennzeichnet, daß das rohrförmige Teil (7) eine der Dämpfungscharakteristik angepaßte innere Kontur (15) aufweist.

8. Schwingungsdämpfer nach Anspruch 5 oder 6, dadurch gekennzeichnet, daß das rohrförmige Teil (7) an der dem Anschlagkolben zugewandten Seite angefast ist.

9. Schwingungsdämpfer nach einem der Ansprüche 1 bis 8, dadurch gekennzeichnet, daß zur Beeinflussung der Dämpfungskraft der Anschlagkolben (14) aus mindestens zwei Anschlagscheiben (2) mit korrespondierenden Durchlaßkanälen (4) und einem Abstützteil (3) besteht.

## Claims

1. A hydraulic shock absorber for motor vehicles having a damping cylinder containing a damping fluid, a damping piston connected to a piston rod, which piston divides the damping cylinder into two working chambers, a guide unit which is disposed at the end penetrated by the piston rod and closes the damping cylinder, and a hydraulic pulling stop, consisting of a cup-shaped recess located under the guide unit, and a stopping piston disposed above the damping piston on the piston rod and comprising through flow ducts which are closed in the pulling direction, characterised in that the stopping piston consists of only a thin stopping plate (2) comprising a slightly smaller outer diameter than the control diameter of the recess (1), and a thicker support part (3) supporting the stopping plate (2).

2. A shock absorber according to claim 1, characterised in that the support part (3) has a smaller outer diameter than the stopping plate (2).

3. A shock absorber according to claim 1 or 2, characterised in that the non-return valves closing the through ducts (4) in the pulling direction are disposed between the support part (3) and the stopping plate (2).

4. A shock absorber according to either claim 1 or 2, characterised in that the non-return valves closing the through ducts (4) in the pulling direction are disposed above the stopping plate (2).

5. A shock absorber according to any of claims 1 to 4, characterised in that the non-return valves are formed by at least one spring washer (5) covering the through ducts (4) in the pulling direction.

6. A shock absorber according to any of claims 1 to 5, characterised in that the recess (1) is formed by a tubular part (7) disposed under the guide unit (6) of the piston rod (8).

7. A shock absorber according to claim 6, characterised in that the tubular part (7) comprises an inner contour (15) adapted to the shock absorbing characteristics.

8. A shock absorber according to claim 5 or 6, characterised in that the tubular part (7) is chamfered on the side facing the stopping piston.

9. A shock absorber according to any of claims 1 to 8, characterised in that in order to influence the shock absorbing force, the stopping piston (14) consists of at least two stopping plates (2) with corresponding through ducts (4) and a support part (3).

## Revendications

1. Amortisseur hydraulique de vibration pour véhicules, comportant un cylindre d'amortisseur contenant un liquide d'amortissement, un piston d'amortissement relié à une tige de piston et partageant le cylindre d'amortisseur en deux chambres de travail, une unité de guidage disposée à l'extrémité traversée par la tige de piston et refermant le cylindre d'amortisseur, et une butée hydraulique de traction constituée d'un évidement en forme de godet situé en dessous de l'unité de guidage, et d'un piston de butée disposé sur la tige de piston au-dessus du piston d'amortissement, présentant des canaux de passage fermés dans la direction de traction, caractérisé en ce que le piston de butée est constitué uniquement d'un mince disque de butée (2) présentant un diamètre légèrement plus petit que le diamètre pilote de l'évidement (1) et d'une pièce d'appui (3) plus épaisse portant le disque de butée (2).

2. Amortisseur de vibration selon la revendication 1, caractérisé en ce que la pièce d'appui (3) présente un diamètre extérieur plus petit que le disque de butée (2).

3. Amortisseur de vibration selon la revendication 1 ou 2, caractérisé en ce que les clapets anti-retour refermant les canaux de passage (4) dans la direction de la traction sont disposés entre la pièce d'appui (3) et le disque de butée (2).

4. Amortisseur de vibration selon l'une des revendications 1 ou 2, caractérisé en ce que les clapets anti-retour refermant les canaux de passage (4) dans la direction de la traction sont disposés au-dessus du disque de butée (2).

5. Amortisseur de vibration selon l'une des revendications 1 à 4, caractérise en ce que les clapets anti-retour sont formés par au moins un disque élastique (5) recouvrant les canaux de passage (4) dans la direction de la traction.

6. Amortisseur de vibration selon l'une des revendications 1 à 5, caractérisé en ce que l'évidement (1) est formé par une pièce tubulaire (7) disposée en dessous de l'unité de guidage (6) de la tige de piston (8).

7. Amortisseur de vibration selon la revendication 6, caractérisé en ce que la pièce tubulaire (7) présente un contour intérieur (15) adapté a la caractéristique d'amortissement.

8. Amortisseur de vibration selon la revendication 5 ou 6, caractérisé en ce que la pièce tubulaire (7) est chanfreinée du côté tourné vers le piston de butée.

9. Amortisseur de vibration selon l'une des revendications 1 à 8, caractérisé en ce que, pour agir sur la force d'amortissement, le piston de butée (14) est constitué d'au moins deux disques de butée (2) à canaux de passage (4) correspondants, et d'une pièce d'appui (3).
